# EUROPÄISCHE PATENTANMELDUNG

(11) **EP 4 258 022 A1**
(43) Veröffentlichungstag der Anmeldung: **11.10.2023**
(21) Anmeldenummer: 22167297.5
(22) Anmeldetag: 08.04.2022
(51) Int. Cl.: G01S 17/89, G01V 8/20, G01S 17/42, G01S 7/48, G01S 7/497

(54) **OPTISCHER SENSOR ZUR ERFASSUNG VON OBJEKTEN IN EINEM ÜBERWACHUNGSBEREICH**

(71) Anmelder: Leuze electronic GmbH + Co. KG, 73277 Owen/Teck (DE)
(72) Erfinder: Struckmeier, Anselm, 73277 Owen/Teck (DE); Sanzi, Dr., Friedrich, 73230 Kirchheim/Teck (DE); Feller, Bernhard, 86316 Friedberg (DE); Quapil, Gerald, 73277 Owen/Teck (DE)
(74) Vertreter: Ruckh, Rainer Gerhard

(57) **Zusammenfassung**

Die Erfindung umfasst eine Sensoranordnung (1) mit einem optischen Sensor (100, 100', 101, 102) wobei der optische Sensor ein Messdaten generierendes Sende-Empfangssystem und eine Auswerteeinheit aufweist. In der Auswerteeinheit werden aus Messdaten Auswertedaten generiert und abhängig von Auswertedaten wird ein Ausgangssignal (160) generiert. Der optische Sensor (100, 100', 101, 102) umfasst eine adaptive Korrektureinheit, welche anhand von Messdaten und/oder Auswertedaten Blendereignisse erfasst. Mittels der adaptiven Korrektureinheit wird abhängig von erfassten Blendereignissen der Betrieb des Sende-Empfangssystem so modifiziert, dass die Wahrscheinlichkeit von Beeinflussungen des optischen Sensors (100, 100', 101, 102) durch Blendereignisse reduziert ist. Die Erfindung betrifft auch ein Verfahren zum Betrieb einer Sensoranordnung.

## Beschreibung

Die Erfindung betrifft eine Sensoranordnung und ein Verfahren zum Betrieb einer Sensoranordnung.

Derartige Sensoranordnungen umfassen generell einen optischen Sensor.

Der optische Sensor kann zur optischen Datenübertragung, Positionserfassung und dergleichen ausgebildet sein.

Insbesondere dienen derartige optische Sensoren zur Erfassung von Objekten in einem Überwachungsbereich. Ein Beispiel für derartige Sensoren sind optische Sensoren in Form von Flächendistanzsensoren. Ein derartiger optischer Sensor weist einen Lichtstrahlen emittierenden Sender und einen Lichtstrahlen empfangenden Empfänger auf. Der Sender und der Empfänger bilden einen Distanzsensor. Weiterhin ist eine Ablenkeinheit vorgesehen, mittels derer die Lichtstrahlen periodisch im Überwachungsbereich geführt sind.

Die Lichtstrahlen werden über die Ablenkeinheit in den Überwachungsbereich geführt. Von einem Objekt zurückreflektierte Lichtstrahlen gelangen über die Ablenkeinheit zurück zum Empfänger. In einer Auswerteeinheit wird abhängig von Empfangssignalen des Empfängers ein Objektfeststellungssignal generiert.

Mit einem derartigen Sensor kann eine Positionsbestimmung von Objekten im Überwachungsbereich durchgeführt werden. Diese Positionsbestimmungen können beispielsweise für eine Schutzfeldüberwachung genutzt werden. Damit kann, insbesondere wenn der optische Sensor ein Sicherheitssensor ist, eine Gefahrenbereichsüberwachung an einer gefahrbringenden Anlage durchgeführt werden. Mit dem optischen Sensor wird dann als Objektfeststellungssignal ein Schaltsignal generiert, dessen Schaltzustände angeben, ob sich ein Objekt im Schutzfeld befindet oder nicht.

Wird mit dem optischen Sensor ein Objekt im Schutzfeld detektiert, wird mit dem Schaltsignal die Anlage in einen sicheren Zustand überführt, insbesondere abgeschaltet.

Bei komplexeren Überwachungsaufgaben werden typischerweise mehrere derartiger Sensoren, insbesondere optische Sensoren eingesetzt. Die optischen Sensoren können sich derartig beeinflussen, dass Lichtstrahlen des einen optischen Sensors in einen anderen optischen Sensor eingestrahlt werden, wodurch in diesem fehlerhafte Daten, Messwerte oder Objektfeststellungssignale generiert werden, insbesondere derart, dass ein Objekt gemeldet wird, obwohl keines vorhanden ist oder verfälschte Daten bzw. Messwerte gemeldet werden.

Auch durch andere externe Störeinstrahlungen können Fehldetektionen des Sensors verursacht sein.

Der Erfindung liegt die Aufgabe zugrunde, die Funktionssicherheit eines Sensors der eingangs genannten Art zu verbessern.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung umfasst eine Sensoranordnung mit einem optischen Sensor, wobei der optische Sensor ein Messdaten generierendes Sende-Empfangssystem und eine Auswerteeinheit aufweist. In der Auswerteeinheit werden aus Messdaten Auswertedaten generiert und abhängig von Auswertedaten wird ein Ausgangssignal generiert. Der optische Sensor umfasst eine adaptive Korrektureinheit, welche anhand von Messdaten und/oder Auswertedaten Blendereignisse erfasst. Mittels der adaptiven Korrektureinheit wird abhängig von erfassten Blendereignissen der Betrieb des Sende-Empfangssystem so modifiziert, dass die Wahrscheinlichkeit von Beeinflussungen des optischen Sensors durch Blendereignisse reduziert ist.

Die Erfindung betrifft auch ein entsprechendes Verfahren.

Erfindungsgemäß weist der optische Sensor der Sensoranordnung eine adaptive Korrektureinheit auf, mit der während des Betriebs des optischen Sensors Blendereignisse erfasst werden. Derartige Blendereignisse sind generell von Störeinstrahlungen gebildet, die dem Sende- und Empfangsbetrieb des Sende-Empfangssystems überlagert sind, diesen stören können und so zu Fehlern im Betrieb des optischen Sensors führen können. Diese Störeinflüsse können durch externe Störlichtquellen, wie in der Umgebung vorhandene Beleuchtungen, gebildet sein. Insbesondere können Störeinstrahlungen von benachbarten, gleichartigen oder unterschiedlichen optischen Sensoren gebildet sein.

Anhand der erfassten Blendereignisse modifiziert die adaptive Korrektureinheit den Betrieb des Sende-Empfangssystems des optischen Sensors derart, dass die Wahrscheinlichkeit, dass danach auftretende Blendereignisse den optischen Sensor beeinflussen, d. h stören, reduziert ist.

Das Sende-Empfangssystem des optischen Sensors umfasst generell ein Sendesystem, das in einem bestimmten Zeittakt Lichtstrahlen emittiert, die in einem Empfangssystem des optischen Sensors empfangen werden, wobei anhand dieser Nutzsignale die Auswerteeinheit des optischen Sensors ein Ausgangssignal generiert. Insbesondere kann das Sendesystem Sendelichtimpulse emittieren, die im Empfangssystem als Empfangslichtimpulse registriert werden.

Mittels der adaptiven Korrektureinheit erfolgt eine vorzugsweise zeit- und amplitudenaufgelöste Auswertung von Empfangssignalen des Empfangssystems, wodurch den Nutzsignalen überlagerte Störsignalanteile, d.h. Blendereignisse, separiert und erfasst werden können. Die adaptive Korrektureinheit analysiert diese Blendereignisse und ändert dann entsprechend den erfassten Blendereignissen den Betrieb des Sende-Empfangssystems, so dass die Wahrscheinlichkeit, dass zukünftige Blendereignisse den Betrieb des Sende-Empfangssystems beeinträchtigen, reduziert wird.

Dadurch wird eine erhöhte Resistenz des optischen Sensors gegen Störeinflüsse erhalten und damit die Funktionssicherheit des optischen Sensors erhöht.

Gemäß einer vorteilhaften Ausführungsform sind in der adaptiven Korrektureinheit adaptive Algorithmen zur Erfassung von Blendereignissen vorhanden.

Insbesondere sind als adaptive Algorithmen adaptive Filter, neuronale Netze, auf Entscheidungsbäumen basierende Algorithmen oder Schätzalgorithmen vorgesehen.

Damit bildet die adaptive Korrektureinheit ein selbstlernendes System, das sich fortlaufend an auftretende Blendereignisse anpasst.

Dies ermöglicht stetig sich verbessernde Wahrscheinlichkeitsaussagen über künftig auftretende Blendereignisse. Die so ausgeführte Adaption des Sende-Empfangssystems des optischen Sensors ermöglicht somit eine effektive Reduzierung von Störeinflüssen auf Blendereignisse, insbesondere ein Ausweichen der vom Sende-Empfangssystem emittierten Lichtstrahlen derart, dass eine störende Überlagerung der Lichtstrahlen durch Blendereignisse vermieden wird.

Besonders vorteilhaft weist die adaptive Korrektureinheit einen KI (künstliche Intelligenz) -Filter auf, der einen Inferenz-Filter bildet.

Der KI-Filter bildet ein selbstlernendes System dadurch, dass der KI-Filter mittels Trainingsdaten optimiert wird.

Vorteilhaft sind Trainingsdaten von Auswertedaten oder Messdaten des optischen Sensors gebildet.

Alternativ sind auch verteilte Systeme derart möglich, dass mehrere optische Sensoren, bzw. diesen zugeordnete Rechnereinheiten, in denen Trainingsdaten verarbeitet werden, ein Netzwerk bilden, wobei diese einzelnen Systeme vorteilhaft Bestandteil einer Cloud sein können.

In diesem Fall können Messdaten und Auswertedaten oder aus diesen gewonnenen Trainingsdaten dieses optischen Sensors an einen Rechner übertragen werden, der dann Trainingsdaten für andere optische Sensoren generiert und diese zur Verfügung stellt.

Gemäß einer ersten Variante können Trainingsdaten eines optischen Sensors vor dessen Betrieb ermittelt werden.

In diesem Fall können vom optischen Sensor generierte Daten, Messdaten und Auswertedaten im optischen Sensor selbst oder in einer separaten Rechnereinheit mittels eines Auswertealgorithmus ausgewertet werden, um Trainingsdaten für den KI-Filter zu generieren. Erfolgt die Auswertung in einer externen Rechnereinheit, die z.B. Bestandteil einer Cloud ist, können die Trainingsdaten auch weiteren gleichartigen optischen Sensoren zur Verfügung gestellt werden.

Dabei können Trainingsdaten manuell, d.h. durch menschliches Wissen annotiert werden, beispielsweise durch Nutzen von Applikationserfahrungen, die Benutzer zur Ableitung von Trainingsdaten einbringen können. Alternativ können Trainingsdaten automatisch durch Algorithmen annotiert werden.

Bei beiden Methoden können folgende Ereignisse anhand charakteristischer Signalanteile in den Messdaten analysiert werden: Analyse hochfrequenter Signalanteile, die auf eine Blendung hindeuten, Driften von Störsignalen, plötzlich sich ändernde Objektpositionen oder plötzlich verschwindende Objekte nach einer Objektdetektion, die auf vorhandene Blendungen hindeuten und zu Schutzfeldverletzungen, die nicht zur Generierung eines Abschaltvorgangs führen, Kenntnisse von Störsignalen und real detektierbaren Objekten und deren Geschwindigkeiten.

Gemäß einer zweiten Variante werden Trainingsdaten vorzugsweise im optischen Sensor selbst während dessen Betriebs ermittelt.

Vorteilhaft ist die Datenmenge, der für die Generierung der Trainingsdaten herangezogenen Daten, signifikant kleiner als die gesamte Datenmenge der Auswertedaten und Messdaten des optischen Sensors. Auch ist der Zeitraum, über welchen Daten zur Ermittlung der Trainingsdaten herangezogen werden, signifikant kleiner als der gesamte Zeitraum der Erfassung von Auswertedaten und Messdaten des optischen Sensors während dessen Betriebs.

Vorteilhaft reicht somit bereits eine begrenzte Datenmenge aus, um geeignete Trainingsdaten zu ermitteln, so dass der gesamte Aufwand für das Training des KI-Filters relativ geringgehalten werden kann.

Besonders vorteilhaft werden Trainingsdaten ereignisbezogen ermittelt. Dabei werden vorteilhaft in einem begrenzten Zeitraum vor und/oder nach einer Objekterfassung oder eines Vorliegens eines Störsignals Messdaten als Trainingsdaten verwendet.

Diese liefern wichtige Zusatzinformationen zum Auftreten von Störungen, insbesondere auch im Zeitbereich von Objekterfassungen.

Besonders vorteilhaft werden in der adaptiven Korrektureinheit Störeinflüsse kennzeichnende Merkmale ermittelt.

Dabei werden in der adaptiven Korrektureinheit aus Messdaten und/oder Auswertedaten des optischen Sensors Merkmale extrahiert, die auf Blendereignisse schließen lassen. Hierzu gehören Abweichungen von erwarteten Nutzsignalen, beispielsweise in Form von Driften von übertragenen Daten, Messdaten oder plötzlich verschwindenden Signalen, insbesondere nach einer Objekterfassung. Auch Phasenlagen von Signalen können hierzu ausgewertet werden. Werden auf diese Weise Blendereignisse extrahiert, können insbesondere auch Blendungsmuster, d.h. Raster bzw. Folgen von Blendereignissen analysiert werden.

Vorteilhaft sind als Störeinflüsse kennzeichnende Merkmale Blendungsmuster vorhanden, die mit Ergebnissen von Objekterkennungen und/oder Störungen und/oder Fehlmessungen des optischen Sensors in Zusammenhang gebracht werden, um daraus auf Blendereignisse zu schließen.

Durch diese Korrelationen können Wahrscheinlichkeitsaussagen für das Auftreten künftiger Blendereignisse ermittelt werden.

Weiter vorteilhaft werden Falschmeldungen über Blendereignisse ermittelt und in Lernprozessen der adaptiven Algorithmen berücksichtigt.

Auch dadurch kann der Lernprozess des KI-Filters gezielt verbessert werden.

Der optische Sensor der erfindungsgemäßen Sensoranordnung kann unterschiedliche Ausgestaltungen und Funktionalitäten aufweisen.

Insbesondere kann der optische Sensor ein optisches Datenübertragungssystem ausbilden, wobei die Ausgangssignale auf optischem Weg übertragene Daten sind.

Ein Beispiel hierfür ist eine Datenlichtschranke, die für eine bidirektionale Datenübertragung zwei entfernt zueinander angeordnete Sende-Empfangseinheiten mit jeweils einem Lichtstrahlen emittierenden Sender und einem Lichtstrahlen empfangenden Empfänger aufweisen. Dabei sendet jeweils ein Sender Daten in Form kodierter Lichtstrahlen zum gegenüberliegenden Empfänger.

Weiterhin kann der optische Sensor ein Positionserkennungssystem sein, wobei die Ausgangssignale Distanzwerte oder Positionswerte sind.

Gemäß einer ersten Variante kann der optische Sensor ein distanzmessender Sensor sein, der 1D-, 2D- oder 3D-Distanz- oder Positionswerte von einer Umgebung generiert.

Gemäß einer zweiten Variante kann der optische Sensor kooperative Ziele, wie z.B. Positionsmarken erfassen, um so Positionsdaten zu ermitteln.

Gemäß einer vorteilhaften Ausführungsform ist der optische Sensor zur Erfassung von Objekten in einem Überwachungsbereich ausgebildet. Die Ausgangssignale sind Objektfeststellungssignale.

Insbesondere ist das Objektfeststellungssignal ein binäres Schaltsignal dessen Schaltzustände angeben, ob ein Objekt im Überwachungsbereich vorhanden ist oder nicht.

Vorteilhaft ist dann der optische Sensor ein Lichtvorhang oder ein Flächendistanzsensor oder ein distanzmessendes Kamerasystem.

Gemäß einer vorteilhaften Ausführungsform ist der Sensor ein Sicherheitssensor.

Der Sicherheitssensor weist einen fehlersicheren Aufbau auf, was insbesondere durch eine redundant aufgebaute Auswerteeinheit erreicht wird. Beispielsweise kann die Auswerteeinheit aus zwei sich zyklisch gegenseitig überwachenden Rechnereinheiten bestehen.

Der Sicherheitssensor kann in sicherheitstechnischen Anwendungen eingesetzt werden, insbesondere zur Gefahrenbereichsüberwachung an gefahrbringenden Anlagen. Insbesondere kann der Sicherheitssensor auch an einer mobilen Einheit wie zum Beispiel einem Fahrzeug angeordnet sein, um deren Vorfeld zu überwachen.

Die Erfindung wird im Folgenden anhand der Zeichnungen erläutert. Es zeigen:
- Figur 1:: Schematische Darstellung eines Beispiels der erfindungsgemäßen Sensoranordnung.
- Figur 2:: Beispiel eines neuronalen Netzwerks für einen optischen Sensor der Sensoranordnung gemäß Figur 1.
- Figur 3:: Darstellung der Funktionsweise einer adaptiven Korrektureinheit des optischen Sensors gemäß Figur 1 mit einem neuronalen Netzwerk gemäß Figur 1.
- Figur 4:: Beispiel einer Datenauswertung für die adaptive Korrektureinheit gemäß Figur 3.
- Figur 5:: Erstes Ausführungsbeispiel eines optischen Sensors für die erfindungsgemäße Sensoranordnung.
- Figur 6:: Zweites Ausführungsbeispiel eines optischen Sensors für die erfindungsgemäße Sensoranordnung.
- Figur 7:: Erste Anordnung mit zwei sich gegenseitig beeinflussenden optischen Sensoren.
- Figur 8:: Zweite Anordnung mit zwei sich gegenseitig beeinflussenden optischen Sensoren.
- Figur 9:: Erste Zeitdiagramme von Sendelichtimpulse und Empfangslichtimpulse für die Anordnung gemäß Figur 7.
- Figur 10:: Zweite Zeitdiagramme von Sendelichtimpulse und Empfangslichtimpulse für die Anordnung gemäß Figur 7.
- Figur 11:: Ausführungsbeispiel eines optischen Sensors in Form eines Lichtvorhangs.
- Figur 12:: Anordnung mit zwei benachbarten Lichtvorhängen.
- Figur 13:: Zeitdiagramme von Lichtimpulsen für die Anordnung gemäß Figur 12.
- Figur 14:: Erste Anordnung zweier optischer Sensoren in Form von Positionssensoren.
- Figur 15:: Zweite Anordnung zweier optischer Sensoren in Form von Positionssensoren.
- Figur 16:: Zeitdiagramm des Zeitverhaltens der Sendelichtemissionen der Positionssensoren gemäß Figur 14 oder 15.

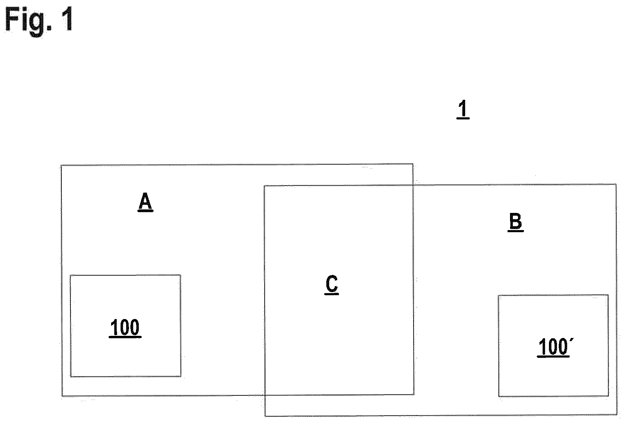

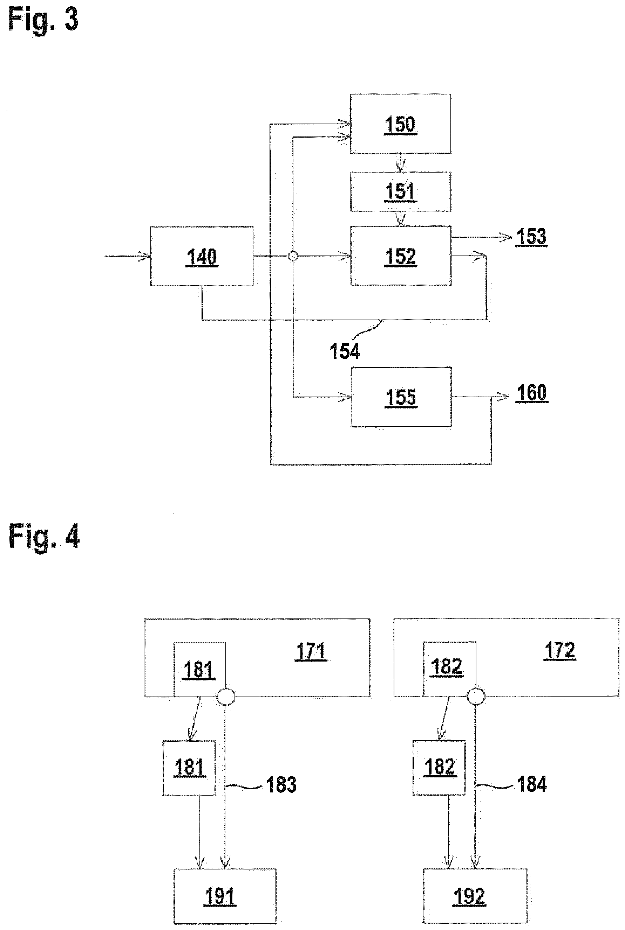

Figur 1 zeigt in stark schematisierter Form ein Ausführungsbeispiel der erfindungsgemäßen Sensoranordnung 1 mit einem optischen Sensor 100. Der optische Sensor 100 weist ein Sende-Empfangssystem und eine Auswerteeinheit (in Figur 1 nicht dargestellt auf). Mit dem Sende-Empfangssystem werden Messdaten generiert, die in der Auswerteeinheit ausgewertet werden. Durch die Auswertung werden Auswertedaten generiert, aus welchen ein Ausgangssignal 160 (Figur 3) abgeleitet wird. Mit dem Sende-Empfangssystem wird ein Sichtbereich A abgedeckt, beispielsweise zur Durchführung von Objekterfassungen.

Weiterhin ist ein zweiter, vorzugsweise baugleicher optischer Sensor 100' vorgesehen, mit dem ein Sichtbereich B abgedeckt wird. Die Sichtbereiche A, B überlappen sich in einem Teilbereich C. Die Sende-Empfangssysteme generieren optische Strahlungen, die zur Objekterfassung verwendet werden. Im überlappenden Teil C kann die optische Strahlung des optischen Sensors 100' als Störstrahlung für den optischen Sensor 100 wirken, wodurch der Betrieb des optischen Sensors 100 gestört werden kann.

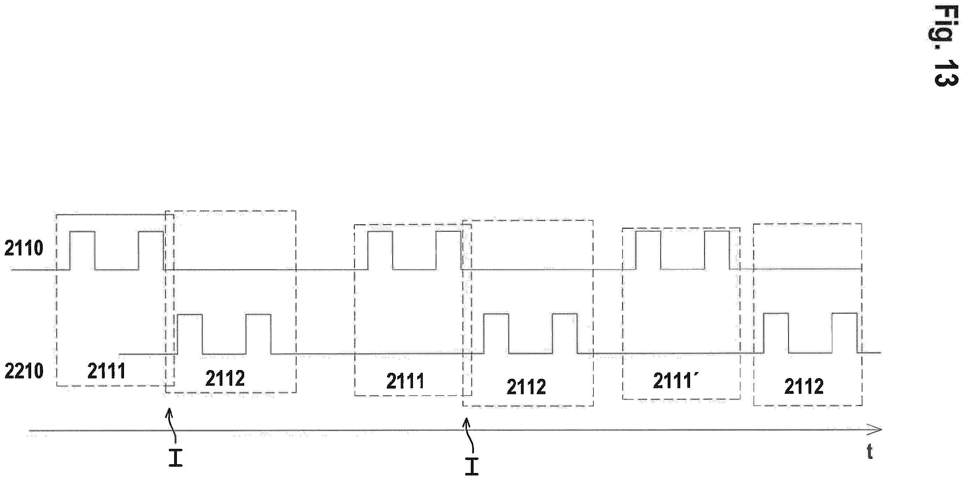

Erfindungsgemäß weist der optische Sensor 100 (und entsprechend auch der optische Sensor 100') eine adaptive Korrektureinheit auf, in der Blendereignisse, d.h. Störeinstrahlungen 2110 (Figur 13) des benachbarten optischen Sensors 100' erfasst werden. Die adaptive Korrektureinheit kann Bestandteil der Auswerteeinheit sein.

Abhängig von den erfassten Blendereignissen modifiziert die adaptive Korrektureinheit den Betrieb des Sende-Empfangssystems des optischen Sensors 100 derart, dass die Wahrscheinlichkeit von Beeinflussungen des optischen Sensors 100 durch Störeinstrahlungen 2110 (Figur 13) des optischen Sensors 100' reduziert ist.

Vorteilhaft sind hierzu in der adaptiven Korrektureinheit adaptive Algorithmen zur Erfassung von Blendereignissen vorhanden.

Dabei können als adaptive Algorithmen adaptive Filter, neuronale Netze, auf Entscheidungsbäumen basierende Algorithmen oder Schätzalgorithmen vorgesehen sein.

Vorteilhaft weist die adaptive Korrektureinheit einen KI-Filter auf.

Hierbei wird der KI-Filter mittels Trainingsdaten optimiert.

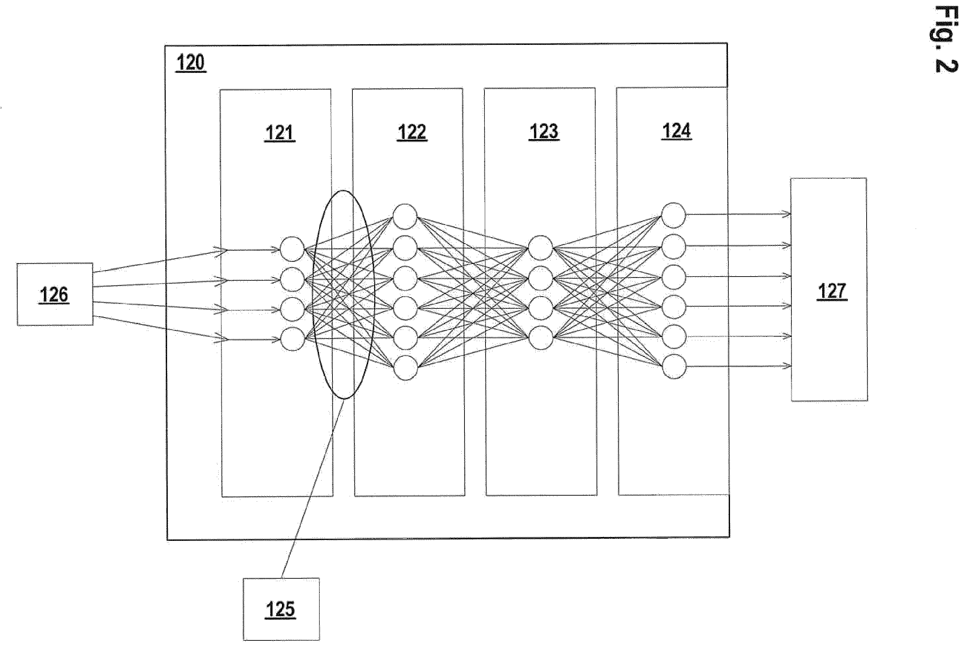

Figur 2 zeigt schematisch ein Beispiel eines neuronalen Netzwerks 120, das insbesondere in einem KI-Filter eingesetzt werden kann.

Das neuronale Netzwerk 120 besteht aus Einzelfunktionen, die in einzelnen Schichten organisiert sind. Als Einzelfunktionen können Filterfunktionen, Funktionszusammenhänge, Übertragungsfunktionen, Entscheidungsmatrizen oder neuronale Vernetzungen vorgesehen sein.

Eine Eingangsschicht 121 dient zur Entgegennahme von Eingangsgrößen 126, die dann zu Zwischengrößen werden.

In Zwischenschichten 122, 123 erfolgt eine Abbildung von Zwischengrößen zu weiteren Zwischengrößen, wobei hier vorzugsweise eine Datenkonzentration erfolgt.

In einer Ausgansschicht 124 erfolgt eine Zusammenfassung aller Größen zu wenigstens einem Gesamtergebnis, welche als Ausgangsgrößen 127 ausgegeben wird.

Weiterhin ist eine Optimierung 125 der Verknüpfung einzelner Schichten möglich.

Aus den Ausgangsgrößen 127 können in der adaptiven Korrektureinheit Maßnahmen abgeleitet werden, um künftigen Blendereignisse auszuweichen. Die einzelnen Neuronen der Ausgangsschicht 124 können dabei jeweils eine solche Maßnahme bilden.

Die Funktion der adaptiven Korrektureinheit des optischen Sensors 100 ist in Figur 3 veranschaulicht.

Das Sende-Empfangssystem sowie die Auswerteeinheit des optischen Sensors 100 sorgen für eine Messwertgenerierung 140, d.h. Bereitstellung von Messdaten und Auswertedaten.

Ein Auswertealgorithmus 150 bereitet aus den Messdaten und Auswertedaten Trainingsdaten auf.

Dabei können Trainingsdaten vor oder während des Betriebs des optischen Sensors 100 ermittelt werden.

Insbesondere werden in einem begrenzten Zeitraum vor und/oder nach einer Objekterfassung oder eines Vorliegens eines Störsignals Messdaten als Trainingsdaten verwendet.

Anhand der Trainingsdaten wird ein KI (künstliche Intelligenz) -Algorithmus 151 trainiert, um durch Störeinstrahlungen bewirkte Blendereignisse, insbesondere Blendungsmuster, d.h. Störsignalfolgen, zu erlernen, wobei dieser Vorgang vorzugsweise nicht in Echtzeit erfolgt.

Mittels eines KI-Algorithmus 152 werden anhand der im KI-Algorithmus 151 durchgeführten Lernprozesse vermeintliche Blendereignisse und Blendungswerte als Blendungsgrößen 153 erfasst und abhängig hiervon Korrekturmaßnahmen 154 definiert, mit denen die Wahrscheinlichkeit einer Beeinträchtigung des optischen Sensors 100 durch künftige Blendereignisse reduziert werden. Hierfür kann das neuronale Netzwerk 120 gemäß Figur 2 eingesetzt werden.

Mit dem korrigierten Sende-Empfangssystem führt der optische Sensor 100 eine Sensorfunktion 155 aus und generiert sein Ausgangssignal 160.

Mit dem Auswertealgorithmus 150 werden generell Störeinflüsse kennzeichnende Merkmale in den Messdaten und Auswertedaten ermittelt.

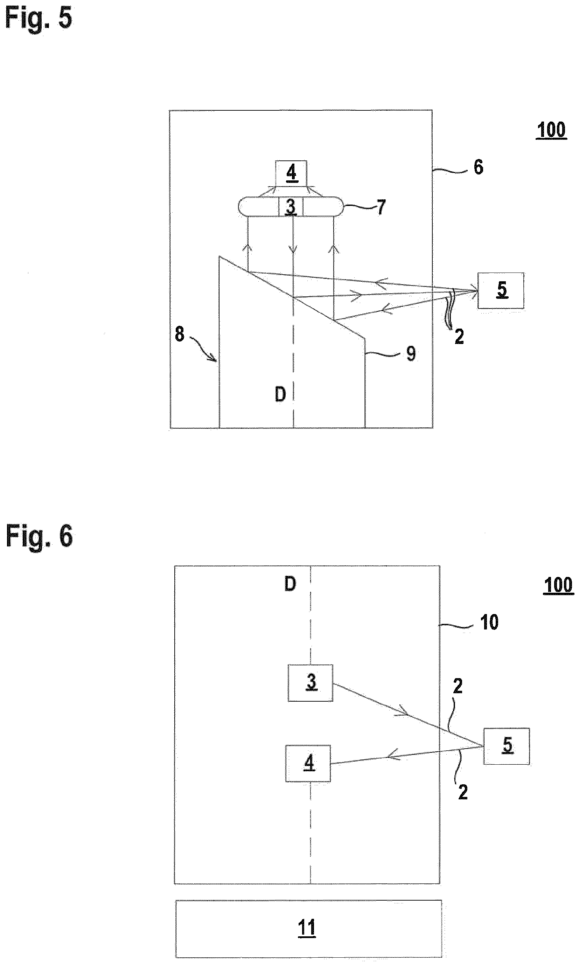

Beispiele hierfür sind ein plötzliches Verschwinden eines zuvor detektierten Objekts 5 (Figur 5), Driften von Störsignalen oder Nutzsignalen, Verfälschungen von Ausgangssignalen 160, wie Entfernungs- oder Geschwindigkeitssignalen, die nicht mit realen Umgebungssituationen korrelieren.

Figur 4 zeigt beispielhaft eine Datenauswertung, wie sie mit, bzw. für die adaptive Korrektureinheit gemäß Figur 3 durchgeführt werden kann.

In Figur 4 sind beispielhaft zwei Datenblöcke 171, 172 mit Messdaten und Auswertedaten dargestellt, die vom Sende-Empfangssystem des optischen Sensors 100 während dessen Betriebs, d.h. Arbeitsbetriebs, oder davor, insbesondere während eines Einlernvorgangs, am Installationsort des optischen Sensors 100 erhalten werden. Die Datenblöcke 171, 172 können in verschiedenen Zeiträumen aufgenommen sein.

Mit einem Auswertealgorithmus 150, der in der Auswerteeinheit des optischen Sensors 100 oder räumlich abgesetzt in einer separaten Rechnereinheit online oder offline durchgeführt wird, werden aus den Datenblöcken 171, 172 Signaturen 181, 182 gewonnen, die gegenüber der Datenmenge der Datenblöcke 171, 172 zeitlich und mengenmäßig begrenzt sind.

Weiterhin werden in den Datenblöcke 171, 172 Fehlsignale 183, 184, die auf ein Fehlverhalten aufgrund eines Störsignals oder auch Signale, die einer Objekterkennung entsprechen, extrahiert.

Aus den Signaturen 181, 182 und den Fehlersignalen 183, 184, die Trainingsdaten bilden, werden Inferenzen 191, 192 für die KI-Algorithmen gemäß Figur 3 abgeleitet.

Die Figuren 5 und 6 zeigen Ausführungsbeispiele des erfindungsgemäßen optischen Sensors 100.

Figur 5 zeigt ein Ausführungsbeispiel eines optischen Sensors 100 in Form eines Flächendistanzsensors, das heißt eines scannenden Distanzsensors. Zur Durchführung von Distanzmessungen weist der optische Sensor 100 einen Lichtstrahlen 2 emittierenden Sender 3 und einen Lichtstrahlen 2 empfangenden Empfänger 4 auf. Der Sender 3 emittiert Lichtstrahlen 2 in Form von

Lichtimpulsen 2110 (Figur 13). Wie Figur 5 zeigt, werden die Lichtstrahlen 2 an einem zu detektierenden Objekt 5 reflektiert, wobei die entsprechende Lichtlaufzeit der Lichtimpulse 2110 (Figur 13) zum Objekt 5 und zurück zum optischen Sensor 100 für die Distanzbestimmungen ausgewertet wird.

Wie Figur 5 zeigt, sind die Sensorkomponenten des optischen Sensors 100 in einem Gehäuse 6 integriert, wobei der Sender 3 sowie der Empfänger 4 mit einer vorgeordneten Sendeoptik beziehungsweise Empfangsoptik 7 stationär im Gehäuse 6 angeordnet sind. Mit dem optischen Sensor 100 erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Drehspiegel 9, an dem die Lichtstrahlen 2 abgelenkt werden. Anstelle eines Drehspiegels 9 kann auch ein Polygonspiegelrad vorgesehen sein.

Figur 6 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Sowohl die Ablenkeinheit 8 des optischen Sensors 100 gemäß Figur 5 als auch der Messkopf 10 des optischen Sensors 100 gemäß Figur 6 bilden ein Strahlführungsmittel mittels dessen die Lichtstrahlen 2 periodisch in einem Überwachungsbereich abgelenkt werden, das heißt die Lichtstrahlen 2 überstreichen in aufeinanderfolgenden Scans den Überwachungsbereich. In der Auswerteeinheit des Sicherheitssensors wird als Objektfeststellungssignal ein binäres Schaltsignal generiert, dessen Schaltzustände angeben, ob sich ein Objekt 5 im Überwachungsbereich befindet oder nicht. Wird im Überwachungsbereich ein Objekt 5 erkannt, wird mit dem Schaltsignal eine Sicherheitsfunktion ausgelöst, insbesondere eine mit dem optischen Sensor 100 überwachte Anlage abgeschaltet. Der optische Sensor 100 weist eine Auswerteeinheit auf, in der die Empfangssignale des Empfängers 4 ausgewertet werden können.

Für den Einsatz im Bereich der Sicherheitstechnik sind die optische Sensoren 100 gemäß den Figuren 5 und 6 als Sicherheitssensoren ausgebildet und weisen einen fehlersicheren Aufbau auf, der beispielsweise durch eine redundante Auswerteeinheit in Form zweier sich zyklisch gegenseitig überwachender Prozessoren realisiert werden kann.

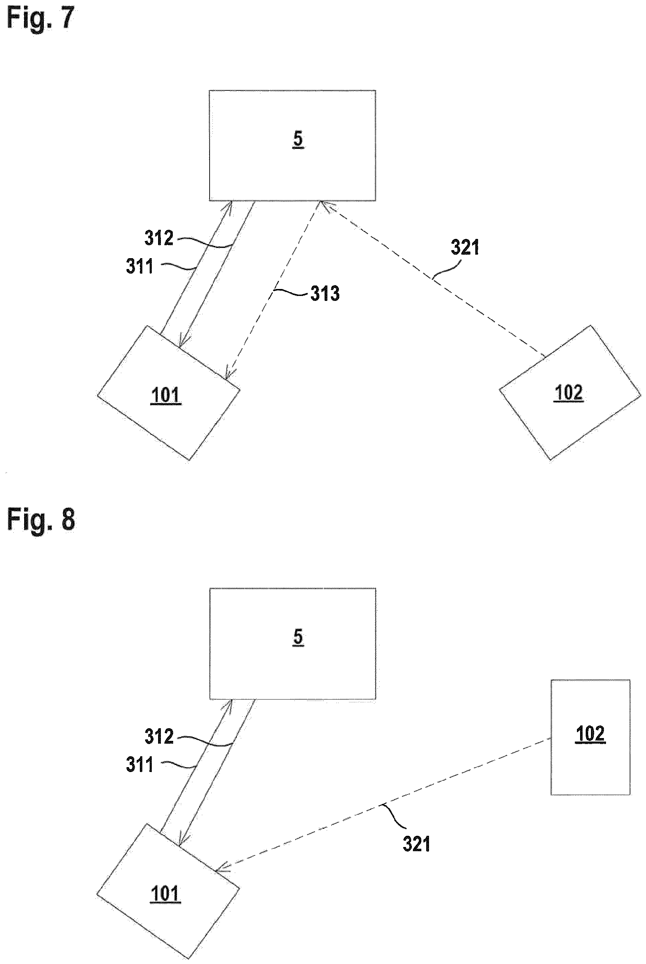

Figur 7 zeigt schematisch eine Applikation mit zwei optischen Sensoren 101, 102, deren Aufbau den optischen Sensoren 100 gemäß Figur 5 beziehungsweise 6 entspricht. Wie Figur 7 zeigt, wird mit dem ersten optischen Sensor 101 ein Objekt 5 detektiert.

Der optische Sensor 101 emittiert hierzu Sendelicht in Form von Sendelichtimpulsen 311, die in Form von Empfangslichtimpulsen 312 vom Objekt 5 zum Empfänger 4 dieses optischen Sensors 101 zurückreflektiert werden. Aus der Lichtlaufzeit dieser Lichtsignale zum Objekt 5 und zurück zum optischen Sensor 101 wird die Distanz des Objekts 5 zum optischen Sensor 101 bestimmt.

Der zweite optische Sensor 102 emittiert ebenfalls Sendelichtimpulse 321 in Richtung des Objekts 5, wobei diese vom Objekt 5 so reflektiert werden, dass diese als Empfangslichtimpulse 313 zum optischen Sensor 101 reflektiert werden, das heißt dort als Störeinstrahlung 2110 (Figur 13) vorliegen.

Figur 8 zeigt eine der Anordnung gemäß Figur 7 weitgehend entsprechende Anordnung mit optischen Sensoren 101, 102, wobei in diesem Fall der optische Sensor 101 Sendelichtimpulse 321 direkt in den optischen Sensor 100 einstrahlt.

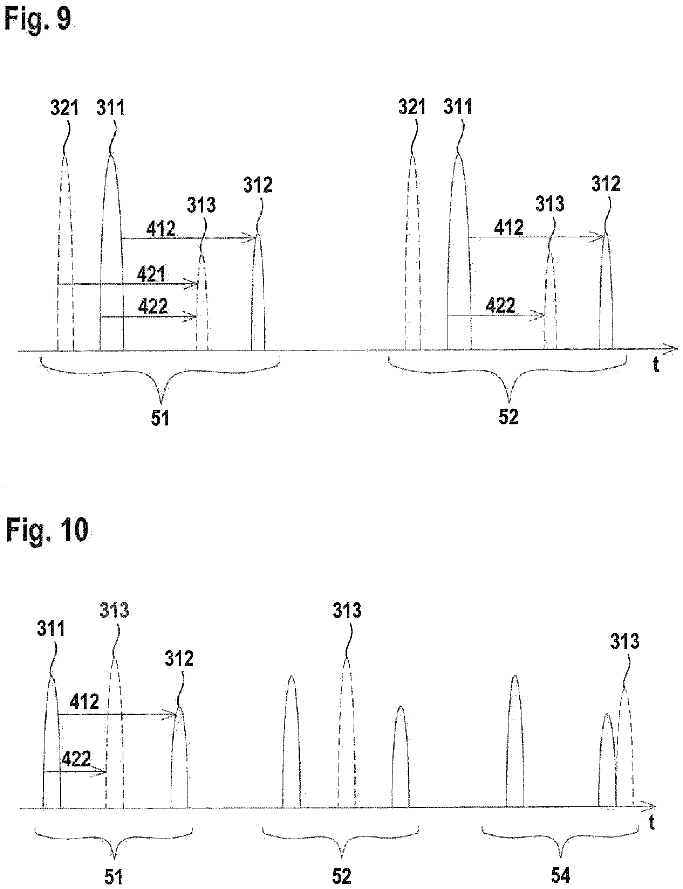

Figur 9 zeigt ein Zeitdiagramm der Signalauswertung für die Anordnung der

Figur 7 für den Fall, dass die Strahlführungsmittel der optischen Sensoren 101, 102 mit derselben Drehzahl betrieben werden. Dabei sind in Figur 9 die am optischen Sensor 101 erhaltenen Signale für Messfenster 51, 52 zweier aufeinander folgender Scans dargestellt.

Figur 9 zeigt, dass der Sendelichtimpuls 311 des optischen Sensors 101 zeitlich versetzt zum Sendelichtimpuls 321 des optischen Sensors 102 emittiert wird. Der Sendelichtimpuls 311 des optischen Sensors 101 wird vom Objekt 5 zurückreflektiert und trifft um eine Zeitdifferenz 412 als Empfangslichtimpuls 312 versetzt auf den Empfänger 4 des optischen Sensors 101. Diese Zeitdifferenz 412 entspricht der Lichtlaufzeit des Sendelichtimpulses 311 zum Objekt 5 und zurück zum Empfänger 4 des optischen Sensors 101. Dies liefert einen korrekten Distanzwert für die Distanz des Objekts 5 zum optischen Sensor 101.

Jedoch wird, wie Figur 9 zeigt, der Sendelichtimpuls 321 des zweiten optischen Sensors 102 vom Objekt 5 zum optischen Sensor 101 reflektiert und generiert dort den Empfangslichtimpuls 313. Der optische Sensor 101 registriert dabei die Zeitdifferenz 422 zwischen dem Sendelichtimpuls 311 und dem eines Störlichtpuls bildenden Empfangslichtimpulses 313 des zweiten optischen Sensors 102.

Dies führt zur Generierung eines verfälschten Distanzwerts für die Distanz des Objekts 5 zum optischen Sensor 101.

Da die Strahlführungsmittel der optischen Sensoren 101, 102 in diesem Fall mit derselben Drehzahl betrieben werden, wiederholen sich die Signale während des ersten Messfensters 51 exakt wieder im zweiten Messfenster 52. Damit registriert der optische Sensor 101 wieder die verfälschte Zeitdifferenz 422, d.h. die Distanz des Objekts 5 im optischen Sensor 101 wird falsch bestimmt.

Um derartige Fehldetektionen werden mit der adaptiven Korrektureinheit des optischen Sensors 101 die Störeinstrahlungen des optischen Sensors 102 als Blendereignisse erfasst. Dann werden in der adaptiven Korrektureinheit Maßnahmen generiert, durch welche künftige Blendereignisse den optischen Sensor 101 mit einer geringeren Wahrscheinlichkeit beeinträchtigen.

Hierzu werden, z.B. wie in Figur 10 die dargestellten Messfenster 51, 52, 54 des optischen Sensors 101 verschoben, was z.B. durch eine Drehzahländerung der Strahlführungsmittel bewirkt werden kann. Wie in Figur 10 dargestellt, werden, nachdem in den Messfenstern 51, 52 Störeinstrahlungen 2110 (Figur 13) in der adaptiven Korrektureinheit registriert wurden, die folgenden Messfenster 54 (in Figur 10 ist dabei nur ein solches Messfenster 54 gezeigt) verschoben, so dass die Störeinstrahlung (Empfangslichtimpuls 313 oder im Falle der Anordnung gemäß Figur 8 direkt vom optischen Sensor 102 eingestrahlte Sendelichtimpulse 321) außerhalb dieses Messfensters 54 liegt, bzw. dadurch dass die Störung 313 hinter dem Empfangspuls 312 erfolgt und dessen Entfernung nicht verfälscht.

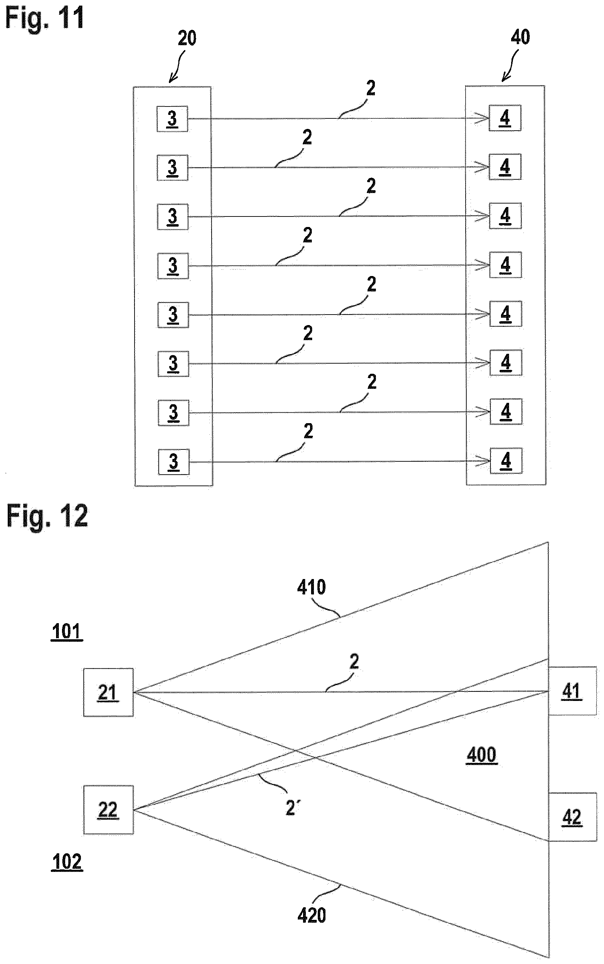

Figur 11 zeigt ein Ausführungsbeispiel eines optischen Sensors 100 in Form eines Lichtvorhangs. Der Lichtvorhang weist eine Sendereinheit 20 und eine Empfängereinheit 40 auf, die an gegenüberliegenden Rändern eines Überwachungsbereichs angeordnet sind. In der Sendereinheit 20 ist eine Reihenanordnung von Sendern 3 vorgesehen, die Lichtstrahlen 2 in Form von Lichtimpulsen 2110 (Figur 13) emittieren. In der Empfängereinheit 40 ist eine Reihenanordnung von Lichtstrahlen 2 empfangenden Empfängern 4 vorgesehen.

Bei freiem Überwachungsbereich treffen die Lichtstrahlen 2 jeweils eines Senders 3 auf einen zugeordneten Empfänger 4. Die so gebildeten Sender-Empfänger-Paare bilden Strahlachsen des Lichtvorhangs. Durch optische Synchronisierung werden die Strahlachsen zyklisch einzeln nacheinander aktiviert.

Durch einen Objekteingriff im Überwachungsbereich wird wenigstens eine Strahlachse unterbrochen. Die in der Empfängereinheit 40 vorhandene Auswerteeinheit generiert als Objektfeststellungssignal ein binäres Schaltsignal, dessen Schaltzustände angeben, ob sich ein Objekt 5 im Überwachungsbereich befindet oder nicht.

Figur 12 zeigt eine Anordnung zweier benachbarter, jeweils als Lichtvorhang ausgebildeter optischer Sensoren 101, 102. Der erste Lichtvorhang weist eine Sendereinheit 21 und eine Empfängereinheit 41 auf. Der zweite Lichtvorhang weist eine Sendereinheit 22 und eine Empfängereinheit 42 auf. In Figur 12 sind die Strahlwinkelbereiche 410, 420 der Sendereinheiten 21, 22 beider Lichtvorhänge eingezeichnet. Die Strahlwinkelbereiche 410, 420 überlappen sich in einem Überlappungsbereich 400. Daher werden in die Empfängereinheit 41 des Lichtvorhangs nicht nur die Lichtstrahlen 2 der Sendereinheit 21 dieses Lichtvorhangs eingestrahlt, sondern als Störstrahlen auch Lichtstrahlen 2' der Sendereinheit 22 des zweiten Lichtvorhangs, wie in Figur 12 veranschaulicht.

Figur 13 zeigt Zeitdiagramme der Lichtimpulse 2110 des ersten Lichtvorhangs und der Lichtimpulse 2210 des zweiten Lichtvorhangs.

Wie Figur 13 zeigt, treten in den Zeitfenstern 2111 Störeinstrahlungen derart auf, dass den vom ersten Lichtvorhang emittierten Lichtimpulsen 2110 kurzzeitig Lichtimpulse 2210 des zweiten Lichtvorhangs überlagert sind (in Figur 13 mit I gekennzeichnet).

Die adaptive Korrektureinheit des ersten Lichtvorhangs registriert diese Störeinstrahlungen, d.h. Blendereignisse, und verschiebt den Sendetakt des ersten Lichtvorhangs (Zeitfenster 2111') so, dass eine Störeinstrahlung 2110 vermieden wird.

Generell können auch die empfangsseitigen Abtastfenster verschoben werden.

Wie Figur 13 zeigt, sind die ausgesendeten Pulsgruppen beider Lichtvorhänge durch längere Pausen getrennt. Dadurch und durch geeignete Ausbildung ausgesendeter Lichtimpulse 2110 in Form von Pulsgruppen kann in einem Lichtvorhang die Störstrahlung des jeweils anderen Lichtvorhangs erkannt werden.

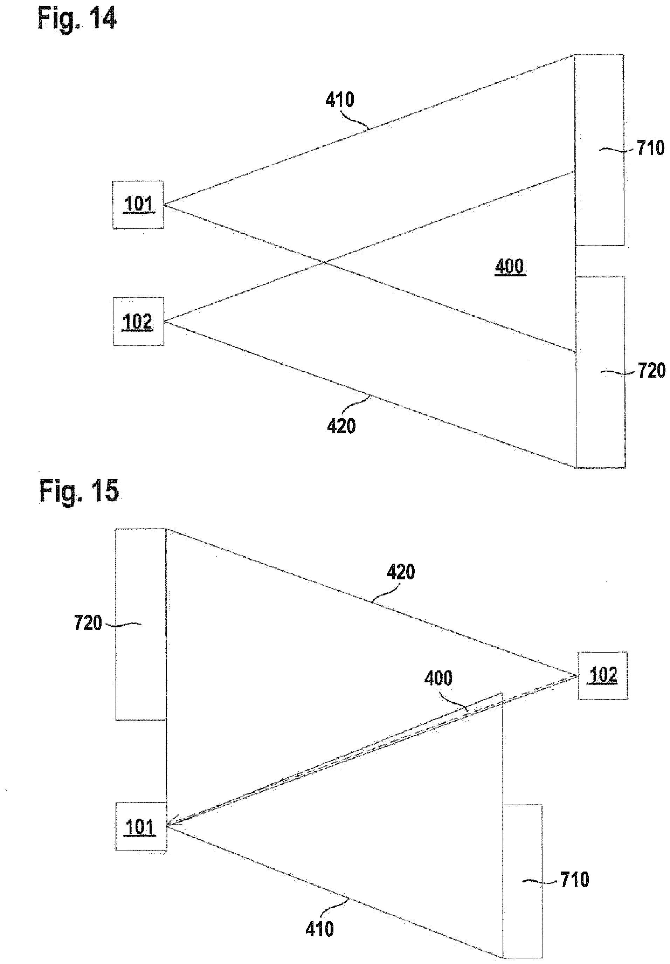

Figur 14 zeigt eine erste Anordnung zweier optischer Sensoren 101, 102 in Form von Positionssensoren. Die Positionssensoren dienen zur Detektion von Marken eines Positionsmaßstabs 710, 720, der in Form eines Barcodebands ausgebildet sein kann. Durch die Erfassung der Marken ist eine Positionierung der Positionssensoren relativ zum Positionsmaßstab 710, 720 möglich. Mit dem optischen Sensor 101 wird der Positionsmaßstab 710 erfasst, mit dem optischen Sensor 102 wird der Positionsmaßstab 720 erfasst.

Die Positionssensoren emittieren Sendelicht in einem Strahlwinkelbereich 410 bzw. 420. Die Strahlwinkelbereiche 410, 420 überlappen in einem Überlappungsbereich 400, wodurch ein Positionssensor Störstrahlung vom anderen Positionssensor empfangen kann.

Die Positionssensoren können in Form von kamerabasierten Sensoren oder scannenden Systemen gebildet sein.

Bei der Anordnung der Figur 14 sind die Positionssensoren nebeneinander und auch die Positionsmaßstäbe 710, 720 nebeneinander angeordnet.

Figur 15 zeigt eine Variante dieser Anordnung derart, dass sowohl die Positionssensoren als auch die Positionsmaßstäbe 710, 720 gegenüberliegend angeordnet sind.

Auch in diesem Fall überlappen die Strahlwinkelbereiche 410, 420 in einem Überlappungsbereich 400, so dass Störeinstrahlungen 2110 von einem Positionssensor in dem anderen Positionssensor möglich sind.

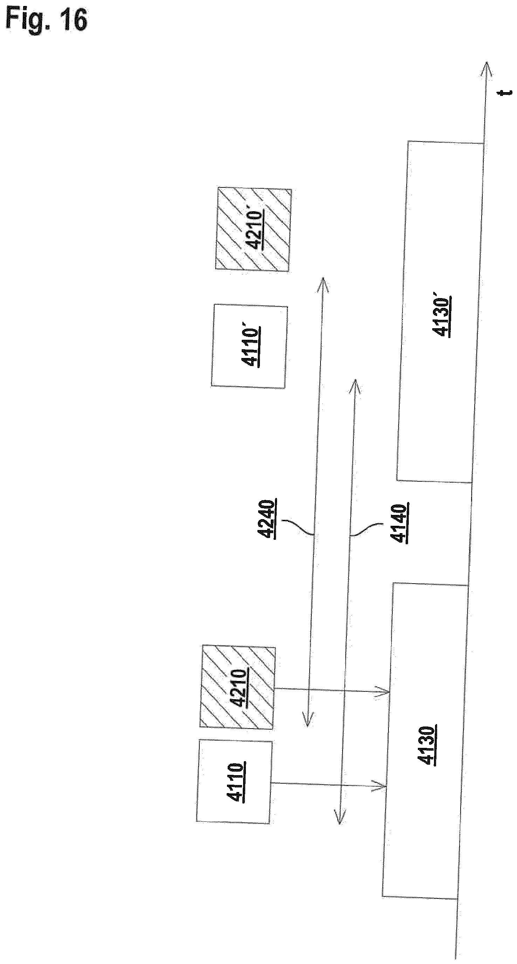

Figur 16 zeigt ein Zeitdiagramm für den Sendebetrieb der beiden Positionssensoren gemäß Figur 14 oder Figur 15.

In Figur 16 sind die Beleuchtungszeitintervalle 4110, 4110' der ersten Positionssensoren und die Beleuchtungszeitintervalle 4210, 4210' des zweiten Positionssensors dargestellt, in welchen der erste Positionssensor den ersten Detektionsbereich und der zweite Positionssensor den zweiten Detektionsbereich ausleuchtet.

Mit 4130, 4130' sind die Zeitbereiche des Kamerabilds bzw. der am Empfänger 4 des scannenden Systems registrierten Signale bezeichnet.

Mit 4140 ist der Erfassungszyklus des ersten Positionssensors bezeichnet.

Mit 4240 ist der Erfassungszyklus des zweiten Positionssensors bezeichnet.

Mittels der adaptiven Korrektureinheiten der Positionssensoren können die Beleuchtungszeitintervalle 4110, 4110' bzw. 4210, 4210' bzw. die Erfassungszyklen 4140, 4240 so verschoben werden, dass die Wahrscheinlichkeit einer gegenseitigen Beeinflussung bei der Positionssensoren reduziert wird.

### B ezugszei chenli ste

- (1): Sensoranordnung
- (2): Lichtstrahl
- (2'): Lichtstrahl
- (3): Sender
- (4): Empfänger
- (5): Objekt
- (6): Gehäuse
- (7): Empfangsoptik
- (8): Ablenkeinheit
- (9): Drehspiegel
- (10): Messkopf
- (11): Sockel
- (20): Sendereinheit
- (21): Sendereinheit
- (22): Sendereinheit
- (40): Empfängereinheit
- (41): Empfängereinheit
- (42): Empfängereinheit
- (51): Messfenster
- (52): Messfenster
- (54): Messfenster
- (100): optischer Sensor
- (100'): optischer Sensor
- (101): optischer Sensor
- (102): optischer Sensor
- (120): neuronales Netzwerk
- (121): Eingangsschicht
- (122): Zwischenschicht
- (123): Zwischenschicht
- (124): Ausgangsschicht
- (125): Optimierung
- (126): Eingangsgröße
- (127): Ausgangsgröße
- (140): Messwertgenerierung
- (150): Auswertealgorithmus
- (151): Algorithmus
- (152): KI-Algorithmus
- (153): Blendungsgröße
- (154): Korrekturmaßnahme
- (155): Sensorfunktion
- (160): Ausgangssignal
- (171): Datenblock
- (172): Datenblock
- (181): Signatur
- (182): Signatur
- (183): Fehlersignal
- (184): Fehlersignal
- (191): Inferenz
- (192): Inferenz
- (311): Sendelichtimpuls
- (312): Empfangslichtimpuls
- (313): Empfangslichtimpuls
- (321): Sendelichtimpuls
- (400): Überlappungsbereich
- (410): Strahlwinkelbereiche
- (412): Zeitdifferenz
- (420): Strahlwinkelbereiche
- (421): Zeitdifferenz
- (422): Zeitdifferenz
- (710): Positionsmaßstab
- (720): Positionsmaßstab
- (2110): Lichtimpulse
- (2111): Zeitfenster
- (2111'): Zeitfenster
- (2112): Zeitfenster
- (2210): Lichtimpulse
- (4110): Beleuchtungszeitintervall
- (4110'): Beleuchtungszeitintervall
- (4130): Zeitbereiche
- (4130'): Zeitbereiche
- (4140): Erfassungszyklen
- (4140'): Erfassungszyklen
- (4210): Beleuchtungszeitintervall
- (4210'): Beleuchtungszeitintervall
- A: Sichtbereich
- B: Sichtbereich
- C: Teilbereich

## Patentansprüche

1. Sensoranordnung (1) mit einem optischen Sensor (100, 100', 101, 102), wobei der optische Sensor ein Messdaten generierendes Sende-Empfangssystem und eine Auswerteeinheit aufweist, wobei in der Auswerteeinheit aus Messdaten Auswertedaten generiert werden und abhängig von Auswertedaten ein Ausgangssignal (160) generiert wird, **dadurch gekennzeichnet, dass** der optische Sensor (100, 100', 101, 102) eine adaptive Korrektureinheit aufweist, welche anhand von Messdaten und/oder Auswertedaten Blendereignisse erfasst, und dass mittels der adaptiven Korrektureinheit abhängig von erfassten Blendereignissen der Betrieb des Sende-Empfangssystems so modifiziert wird, dass die Wahrscheinlichkeit von Beeinflussungen des optischen Sensors (100, 100', 101, 102) durch Blendereignisse reduziert ist.

2. Sensoranordnung (1) nach Anspruch 1, **dadurch gekennzeichnet, dass** der optische Sensor (100, 100', 101, 102) ein optisches Datenübertragungssystem ausbildet, wobei die Ausgangssignale (160) auf optischem Weg übertragene Daten sind.

3. Sensoranordnung (1) nach Anspruch 1, **dadurch gekennzeichnet, dass** der optische Sensor (100, 100', 101, 102) ein Positionserkennungssystem ist, wobei die Ausgangssignale (160) Distanzwerte oder Positionswerte sind.

4. Sensoranordnung (1) nach Anspruch 1, **dadurch gekennzeichnet, dass** der optische Sensor (100, 100', 101, 102) zur Erfassung von Objekten (5) in einem Überwachungsbereich ausgebildet ist, und dass die Ausgangssignale (160) Objektfeststellungssignale oder Positionsdaten sind.

5. Sensoranordnung (1) nach Anspruch 4, **dadurch gekennzeichnet, dass** das Objektfeststellungssignal ein binäres Schaltsignal ist, dessen Schaltzustände angeben, ob ein Objekt (5) im Überwachungsbereich vorhanden ist oder nicht.

6. Sensoranordnung (1) nach einem der Ansprüche 4 oder 5, **dadurch gekennzeichnet, dass** der optische Sensor (100, 100', 101, 102) ein Lichtvorhang oder ein Flächendistanzsensor oder ein distanzmessendes Kamerasystem ist.

7. Sensoranordnung (1) nach einem der Ansprüche 1 bis 6, **dadurch gekennzeichnet, dass** der optische Sensor (100, 100', 101, 102) ein Sicherheitssensor ist.

8. Sensoranordnung (1) nach einem der Ansprüche 1 bis 7, **dadurch gekennzeichnet, dass** in der adaptiven Korrektureinheit adaptive Algorithmen (151) zur Erfassung von Blendereignissen vorhanden sind.

9. Sensoranordnung (1) nach Anspruch 8, **dadurch gekennzeichnet, dass** als adaptive Algorithmen (151) adaptive Filter, neuronale Netze, auf Entscheidungsbäumen basierende Algorithmen oder Schätzalgorithmen vorgesehen sind.

10. Sensoranordnung (1) nach Anspruch 9, **dadurch gekennzeichnet, dass** die adaptive Korrektureinheit einen KI-Filter aufweist.

11. Sensoranordnung (1) nach Anspruch 10, **dadurch gekennzeichnet, dass** der KI-Filter mittels Trainingsdaten optimiert wird.

12. Sensoranordnung (1) nach Anspruch 11, **dadurch gekennzeichnet, dass** Trainingsdaten von Auswertedaten oder Messdaten des optischen Sensors (100, 100', 101, 102) gebildet sind.

13. Sensoranordnung (1) nach einem der Ansprüche 11 oder 12, **dadurch gekennzeichnet, dass** Trainingsdaten von anderen optischen Sensoren (100, 100', 101, 102) genutzt werden.

14. Sensoranordnung (1) nach Anspruch 13, **dadurch gekennzeichnet, dass** die optischen Sensoren (100, 100', 101, 102) und/oder dem optischen Sensor (100, 100', 101, 102) zugeordnete Rechnereinheiten Bestandteil einer Cloud sind.

15. Sensoranordnung (1) nach einem der Ansprüche 11 bis 14, **dadurch gekennzeichnet, dass** Trainingsdaten vor oder während des Betriebs des optischen Sensors (100, 100', 101, 102) ermittelt werden.

16. Sensoranordnung (1) nach einem der Ansprüche 12 bis 15, **dadurch gekennzeichnet, dass** die Datenmenge der Trainingsdaten signifikant kleiner als die Datenmenge der Auswertedaten und Messdaten ist.

17. Sensoranordnung (1) nach einem der Ansprüche 12 bis 16, **dadurch gekennzeichnet, dass** in einem begrenzten Zeitraum vor und/oder nach einer Objekterfassung oder eines Vorliegens eines Störsignals Messdaten als Trainingsdaten verwendet werden.

18. Sensoranordnung (1) nach einem der Ansprüche 8 bis 17, **dadurch gekennzeichnet, dass** in der adaptiven Korrektureinheit Störeinflüsse kennzeichnende Merkmale ermittelt werden.

19. Sensoranordnung (1) nach Anspruch 18, **dadurch gekennzeichnet, dass** als Störeinflüsse kennzeichnende Merkmale Blendungsmuster vorhanden sind, die mit Ergebnissen von Objekterkennungen und/oder Störungen und/oder Fehlmessungen des optischen Sensors (100, 100', 101, 102) in Zusammenhang gebracht werden, um daraus auf Blendereignisse zu schließen.

20. Sensoranordnung (1) nach einem der Ansprüche 8 bis 19, **dadurch gekennzeichnet, dass** Falschmeldungen über Blendereignisse ermittelt und in Lernprozessen der adaptiven Algorithmen berücksichtigt werden.

21. Verfahren zum Betrieb einer Sensoranordnung (1) mit einem optischen Sensor (100, 100', 101, 102), wobei der optische Sensor (100, 100', 101, 102) ein Messdaten generierendes Sende-Empfangssystem und eine Auswerteeinheit aufweist, wobei in der Auswerteeinheit aus Messdaten Auswertedaten generiert werden und abhängig von Auswertedaten ein Ausgangssignal (160) generiert wird, **dadurch gekennzeichnet, dass** der optische Sensor eine adaptive Korrektureinheit aufweist, welche anhand von Messdaten und/oder Auswertedaten Blendereignisse erfasst, und dass mittels der adaptiven Korrektureinheit abhängig von erfassten Blendereignissen der Betrieb des Sende-Empfangssystems so modifiziert wird, dass die Wahrscheinlichkeit von Beeinflussungen des optischen Sensors (100, 100', 101, 102) durch Blendereignisse reduziert ist.
